# EUROPÄISCHE PATENTSCHRIFT

(11) **EP 0 671 495 B1**
(45) Veröffentlichungstag und Bekanntmachung des Hinweises auf die Patenterteilung: **28.10.1998**
(21) Anmeldenummer: 94810147.2
(22) Anmeldetag: 08.03.1994
(51) Int. Cl.: D03D 39/22, D03D 49/60, F16H 53/06

(54) **Vorrichtung zur Steuerung der Bewegung einer Weblade und Webmaschine mit einer solchen Vorrichtung**
Slay motion command device and loom with such a device
Dispositif de commande du mouvement du battant d'un métier à tisser et métier équipé d'un tel dispositif

(43) Veröffentlichungstag der Anmeldung: 13.09.1995
(73) Patentinhaber: SULZER RÜTI AG, CH-8630 Rüti (CH)
(72) Erfinder: Bucher, Robert, CH-5262 Frick (CH)
(74) Vertreter: Heubeck, Bernhard

(56) Entgegenhaltungen:
- EP-A- 0 350 446
- US-A- 2 325 099
- US-A- 2 552 350
- US-A- 3 263 512
- US-A- 3 998 506

## Beschreibung

Die vorliegende Erfindung betrifft eine Vorrichtung zur Steuerung der Bewegung einer Weblade für Webmaschinen gemäss dem Oberbegriff des Anspruchs 1.

Wird zur Herstellung von Frottierware das Prinzip der Webladensteuerung angewendet, so müssen für die Weblade zwei unterschiedliche Bewegungen bzw. zwei unterschiedliche Schwenkwinkel der Weblade ausführbar sein.

Eine hierzu geeignete Vorrichtung ist in der EP-A-0 350 446 beschrieben. Bei dieser Vorrichtung werden die Schwenkwinkel der Weblade durch eine Steuerscheibe bestimmt auf der Abtastelemente eines Gelenkmechanismus abrollen der einerseits über Komplementärkurven mit der Antriebswelle einer Webmaschine und andererseits mit einer auf einer Ladrohrachse angeordneten Weblade verbunden ist. Zur Einstellung des Schwenkwinkels ist die Steuerscheibe durch einen separaten Antrieb verstellbar.

Die bekannte Vorrichtung hat den Nachteil, dass aufgrund der schnell aufeinander folgenden Abrollvorgänge mit Bewegungsumkehr, die Laufflächen übermässig abgenutzt werden, wodurch Schwenkwinkelabweichungen entstehen können und ein Auswechseln der Teile erforderlich wird.

Die Erfindung liegt die Aufgabe zugrunde, eine Vorrichtung zur Steuerung der Bewegung einer Weblade für Webmaschinen zu verbessern, so dass der genannte Nachteil behoben ist.

Diese Aufgabe wird erfindungsgemäss mit den kennzeichnenden Merkmalen des Anspruches 1 gelöst.

Die Vorteile der Erfindung sind darin zu sehen, dass eine übermässige Abnützung vermieden wird, und somit die genaue Schwenkwinkelverstellung über die Steuerscheibe durch den Antrieb, auch bei schnellen Verstellbewegungen einwandfrei gewährleistet ist.

Eine Webmaschine mit einer Vorrichtung zur Steuerung der Bewegung einer Weblade für Webmaschinen ist durch die Ansprüche 2 und 3 gekennzeichnet.

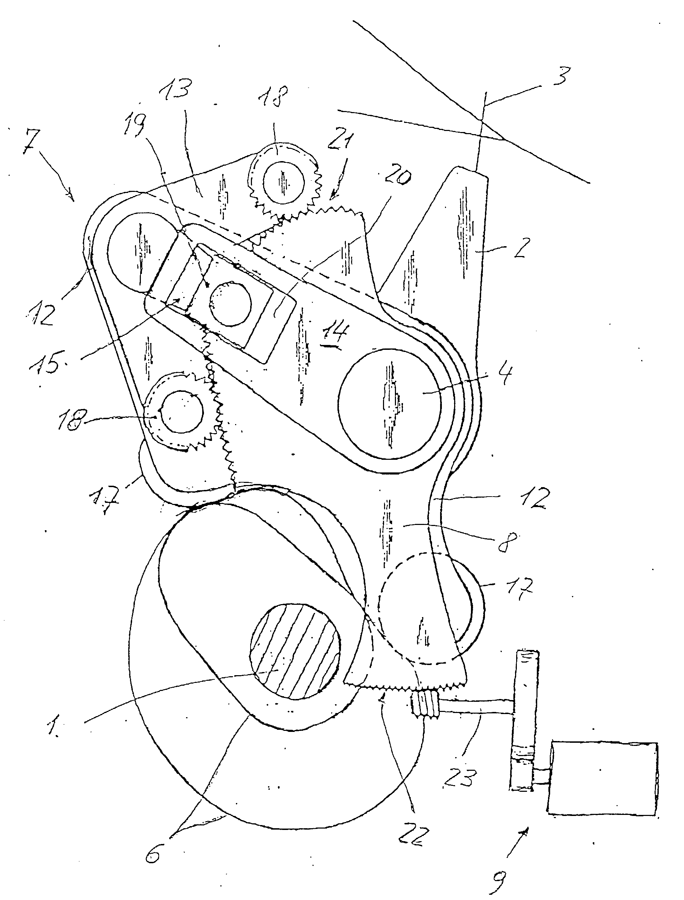

Im folgenden wird die Erfindung anhand der beiliegenden Figur erläutert, die ein Ausführungsbeispiel einer erfindungsgemässen Vorrichtung zeigt.

Die hier in Rede stehende Vorrichtung wird von einer Hauptantriebswelle 1 einer an sich bekannten Webmaschine angetrieben und betätigt eine Weblade 2 mit einem Webblatt 3. Die Weblade 2 ist an einer Ladrohrachse 4 befestigt.

Die Vorrichtung besteht im wesentlichen aus Komplementärkurven 6, einem Gelenkmechanismus 7 und einer Steuerscheibe 8 mit einem separaten Antrieb 9. Der Gelenkmechanismus 11 enthält im wesentlichen einen Rollenhebel 12, einen Kniehebel 13, eine Lasche 14 und eine Führungseinrichtung 15.

Die Komplementärkurven 6 sind auf der Antriebswelle 1 drehfest montiert. Der Rollenhebel 12 ist auf der Ladrohrachse 4 schwenkbar angeordnet und weist Rollen 17 auf, die auf den Komplementärkurven 11 abrollen. An dem Rollenhebel 12 ist der Kniehebel 13 im Kniebereich angelenkt. An den freien Enden des Kniehebels sind Zahnräder 18 drehbar angeordnet. Die Lasche 14 ist drehfest mit der Ladrohrachse 4 verbunden. Die Führungseinrichtung 15 umfasst einen Gleitstein 19, der an dem Kniehebel angelenkt ist und eine Gleitsteinführung 20, die in der Lasche 14 ausgebildet ist. Die Steuerscheibe 8 hat eine erste Zahnreihe 21, die mit den Zahnrädern 18 im Eingriff ist und eine zweite Zahnreihe 22, die mit einem Abtriebsglied 23 des separaten Antriebes in Eingriff ist.

Während des Betriebes werden die Komplementärkurven 11 bewegt und der Rollenhebel 12 dementsprechend um die Ladrohrachse 4 geschwenkt. Diese Schwenkbewegung bewirkt eine Verlagerung des Kniehebels 13, so dass die Zahnräder 18 auf der Steuerscheibe 8 abrollen. Der an dem Kniehebel 13 angelenkte Gleitstein 19 wird somit entsprechend der Stellung der Zahnräder 18 auf der Steuerscheibe bewegt. Ueber die Lasche 14 wird die Position des Gleitsteins auf die Weblade übertragen. Entsprechend der Stellung der Steuerscheibe 8 wird somit, über Kniehebel und Gleitstein, eine Anschlagdistanz-Einstellung am Webblatt 2 vorgenommen, die einen Vollanschlag oder einen Teilanschlag bewirkt. Die Einstellung der Anschlagdistanzlänge erfolgt von dem separaten Antrieb 9.

Die Vorrichtung enthält ein auf einer Antriebswelle 1 angeordnetes Exzenterpaket 6, einen mit dem Exzenterpaket und einer Weblade 2 in Wirkverbindung stehenden Gelenkmechanismus 7 und eine den Schwenkwinkel der Weblade bestimmende Steuerscheibe 8, die unter Gewährleistung einer formschlüssigen Bewegungsübertragung mit dem Gelenkmechanismus zusammenwirkt. Durch die Formschlussverbindung werden die von der Steuerscheibe vorgegebenen Schwenkwinkel der Weblade eingehalten.

## Patentansprüche

1. Vorrichtung zur Steuerung der Bewegung einer Weblade für Webmaschinen, welche Vorrichtung Komplementärkurven (6), einen Gelenkmechanismus (7), der mit den Komplementärkurven und der Weblade (2) in Wirkverbindung stehen und eine Steuerscheibe (8) aufweist, die mit dem Gelenkmechanismus in Wirkverbindung steht, um den Schwenkwinkel zu verstellen, wobei der Gelenkmechanismus (7) und die Steuerscheibe (8) unter Gewährleistung einer formschlüssigen Bewegungsübertragung zusammenwirken, dadurch gekennzeichnet, dass die Steuerscheibe (8) eine erste Zahnreihe (21) aufweist und dass der Gelenkmechanismus (7) Zahnrädern (18) aufweist, die mit der ersten Zahnreihe (21) so im Eingriff sind, daß sie auf der Steuerscheibe (8) abrollen.

2. Webmaschine mit einer Vorrichtung nach Anspruch 1, dadurch gekennzeichnet, dass die Komplementärkurven (6) auf der Hauptantriebswelle (1) drehfest montiert sind.

3. Webmaschine nach Anspruch 2, dadurch gekennzeichnet, dass die Webmaschine eine Frottierwebmaschine ist.

## Claims

1. Apparatus for controlling the movement of a sley for weaving machines, wherein the apparatus comprises complementary cams (6), a link mechanism (7), which is in operative connection with the complementary cams and with the sley (2), and a control disc (8), which is in operative connection with the link mechanism, in order to set the angle of pivoting, and wherein the link mechanism (7) and the control disc (8) cooperate while ensuring a form-locked transmission of movement, characterized in that the control disc (8) has a first row of teeth (21) and in that the link mechanism (7) has two toothed wheels (18), which are in engagement with the first row of teeth (21), so that they roll off on the control disc (8).

2. Weaving machine with an apparatus in accordance with claim 1, characterized in that the complementary cams (6) are non-rotatably mounted on the main drive shaft (1).

3. Weaving machine in accordance with claim 2, characterized in that the weaving machine is a terry machine.

## Revendications

1. Dispositif de commande du mouvement d'un battant de métier à tisser, ce dispositif présentant des courbes complémentaires (6), un mécanisme d'articulation (7) en liaison active avec les courbes complémentaires et le battant (2) ainsi qu'un disque de commande (8) en liaison active avec le mécanisme d'articulation pour ajuster l'angle de pivotement, le mécanisme d'articulation (7) et le disque de commande (8) coopérant en assurant une transmission de mouvement par concordance des formes, caractérisé en ce que le disque de commande (8) présente une première rangée de dents (21) et en ce que le mécanisme d'articulation (7) présente des roues dentées (18) qui sont en prise avec la première rangée de dents (21) de façon qu'elles roulent sur le disque de commande (8).

2. Métier à tisser équipé d'un dispositif selon la revendication 1, caractérisé en ce que les courbes complémentaires (6) sont montées immobiles en rotation sur l'arbre d'entraînement principal (1).

3. Métier à tisser selon la revendication 2, caractérisé en ce que le métier à tisser est un métier de tissu-éponge.
